# FASCICULE DE BREVET EUROPEEN

(11) **EP 0 929 603 B1**
(45) Date de publication et mention de la délivrance du brevet: **03.12.2003**
(21) Numéro de dépôt: 97929046.7
(22) Date de dépôt: 04.07.1997
(51) Int. Cl.: C08K 5/435, C08L 77/00

(54) **COMPOSITIONS DE POLYMERES PLASTIFIES**
ZUSAMMENSETZUNGEN WEICHGEMACHTER POLYMERE
PLASTICISED POLYMER COMPOSITIONS

(30) Priorité: 30.09.1996 BE 9600820
(43) Date de publication de la demande: 21.07.1999
(73) Titulaire: UCB, S.A., 1070 Bruxelles (BE)
(72) Inventeur: VAN GYSEL, August, F-59740 Solre le Château (FR); VAN OVERVELT, Jean-Claude, B-7548 Warchin (BE); GODARD, Pierre, B-1490 Court-Saint-Etienne (BE); NANNAN, André, B-9090 Melle (BE); BIEBUYCK, Jean-Jacques, B-1330 Rixensart (BE); DE GROOTE, Philippe, B-1040 Bruxelles (BE)
(86) Numéro de dépôt international: BE9700079
(87) Numéro de publication internationale: WO98014513

(56) Documents cités:
- DE-C- 866 248
- FR-A- 912 502
- FR-A- 2 075 146
- FR-A- 2 110 338
- US-A- 2 499 932
- US-A- 3 335 107
- US-A- 3 491 147
- DATABASE WPI Section Ch, Week 9041 Derwent Publications Ltd., London, GB; Class A23, AN 90-310356 XP002032559 & JP 02 221 467 A (KANAI H) , 4 septembre 1990 & PATENT ABSTRACTS OF JAPAN vol. 14, no. 531 (C-0780), 21 novembre 1990 & JP 02 221467 A (H. KANAI)
- DATABASE WPI Week 6800 Derwent Publications Ltd., London, GB; AN 68-31312Q XP002044000 "esterification of alkylsulfochlorides with polyhydric" & SU 216 708 A (VM KOSTYUCHENKO)
- PATENT ABSTRACTS OF JAPAN vol. 095, no. 001, 28 février 1995 & JP 06 286036 A (TOKAI RUBBER IND LTD), 11 octobre 1994, & DATABASE WPI Week 9445 Derwent Publications Ltd., London, GB; AN 94-363177

## Description

La présente invention se rapporte à des compositions de polymères semi-cristallins plastifiés par des sulfonamides aromatiques dont l'atome d'azote comporte un substituant porteur d'un groupe hydroxyle ou oxycarbonyle.

La problématique des plastifiants dans les polymères est bien connue dans l'état de la technique. L'on pourra se référer à ce sujet, par exemple à l'ouvrage "Encyclopedia of polymer science and engineering", Wiley Ed. 1989, Supplement Vol., pp. 568-647, ou encore au livre "The Technology of Plasticizers", J. K. Sears and J. R. Darby, John Wiley and Sons Inc., 1982.

Il est bien connu que des polymères semi-cristallins tels que le polyamide-6, le polyamide-6,6, les polyamides-4,6, -6,10 et -6,12 et certaines polycétones sont très difficiles à plastifier, à cause de leur température de fusion élevée et de la faible compatibilité entre ces polymères et les plastifiants connus dans l'état de la technique. En effet, si l'on veut incorporer un plastifiant au-delà de ces températures de fusion élevées, typiquement de 250 à 300°C, et même 340°C pour le polyamide-4,6, le plastifiant se dégrade rapidement en colorant le polymère et sa destruction ne permet pas de plastifier efficacement ce dernier; en outre, le plastifiant peut également se volatiliser. Tel est le cas si l'on tente d'utiliser comme plastifiant de ces polyamides le N-n-butylbenzènesulfonamide ou le N-éthyl-p-toluénesulfonamide par exemple, des plastifiants largement utilisés à l'échelle industrielle pour plastifier des polyamides à température de fusion plus basse. Une manière d'atténuer ces inconvénients est de travailler le polymère de manière à ce que le plastifiant ne se trouve à température élevée que le moins longtemps possible mais cette façon de faire entraine des difficultés techniques considérables, dont des pertes très importantes du plastifiant, des problèmes de pollution de l'air liés à la volatilisation brutale et/ou à la dégradation thermique de celui-ci, etc.

A côté du critère de bonne stabilité thermique que doivent présenter des plastifiants pour des polymère semi-cristallins à température de fusion élevée, il y a également le problème de la migration possible hors du polymère de ces plastifiants au cours du temps.

En ce qui concerne les polymères semi-cristallins dont la température de fusion est plus basse, tels que le polyamide-11, le polyamide-12, le polyoxyméthylène, le fluorure de polyvinylidène pour lesquels l'incorporation du plastifiant se fait à des températures de l'ordre de 220°C, le problème de la stabilité thermique du plastifiant est moins critique. Toutefois, la volatilité intrinsèque d'un plastifiant tel que le N-n-butylbenzènesulfonamide peut être à l'origine de problèmes tels qu'une perte du produit et d'odeurs, qu'il faudra éliminer au moyen d'installations complexes et onéreuses.

Il serait donc intéressant de trouver des plastifiants pour les polymères semi-cristallins à température de fusion élevée, tels que le polyamide-6, le polyamide-6,6, les polyamides-4,6, -6,9, -6,10, -6,12 et MXD-6 et certaines polycétones mais aussi le polyamide-11, le polyamide-12, le polyoxyméthylène et le fluorure de polyvinylidène qui seraient stables à des températures élevées allant de 220 à 300°C et même 340°C pour le polyamide-4.6 sans subir de décomposition ni de volatilisation conséquentes. Ces plastifiants ne devraient pas non plus migrer vers la surface du polymère pour éviter le problème d'exsudation. En outre, il va de soi que ces plastifiants devraient effectivement présenter des propriétés plastifiantes au moins équivalentes et de préférence meilleures que celles des plastifiants connus dans l'état de la technique.

De manière surprenante, la demanderesse a maintenant trouvé une famille de sulfonamides aromatiques dont l'atome d'azote comporte un substituant porteur d'un groupe hydroxyle ou oxycarbonyle qui répondent parfaitement à toutes les exigences évoquées ci-dessus pour des plastifiants de polymères semi-cristallins dont la température de fusion est élevée et la température de mise en oeuvre égale ou supérieure à 220°C, de préférence 250°C.

C'est pourquoi, la présente invention se rapporte à des compositions comprenant au moins un polymère et au moins un plastifiant, caractérisée en ce que
- a.: le polymère est semi-cristallin et présente une température de mise en oeuvre égale ou supérieure à 220°C,
- b.: le plastifiant est un benzènesulfonamide aromatique représenté par la formule générale (I). 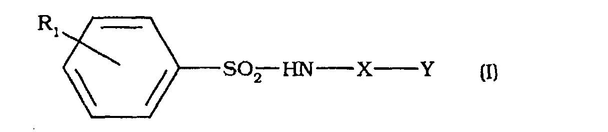
dans laquelle
- R₁: représente un atome d'hydrogène, un groupe alkyle en C₁-C₄ ou un groupe alkoxy en C₁-C₄.
- X: représente un groupe alkylène en C₂-C₁₀, linéaire ou ramifié, ou
un groupe cycloaliphatique, ou
un groupe aromatique.
- Y: représente l'un des groupes OH ou 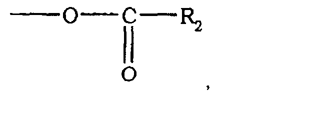
- R₂: représentant un groupe alkyle en C₁-C₄ ou un groupe aromatique, ces groupes étant éventuellement eux-mêmes substitués par un groupe OH ou alkyle en C₁-C₄.
- c.: le plastifiant est incorporé au polymère par mélange à l'état fondu, à raison de 2 à 30% en poids, par rapport au poids total de la composition.

De préférence, le polymère semi-cristallin présente une température de mise en oeuvre égale ou supérieure à 250°C.

Les benzènesulfonamides aromatiques de formule (I) préférés sont ceux pour lesquels:
- R₁: représente un atome d'hydrogène, un groupe méthyle ou méthoxy,
- X: représente un groupe alkylène en C₂-C₁₀, linéaire ou ramifié, ou un groupe phényle,
- Y: représente un groupe OH ou -O-CO-R₂,
- R₂: représentant un groupe méthyle ou phényle, ceux-ci étant éventuellement eux-mêmes substitués par un groupe OH ou méthyle.

Les polymères semi-cristallins concernés par la présente invention sont ceux dont la température de mise en oeuvre est égale ou supérieure à 220°C, de préférence 250°C, cette température de mise en oeuvre étant imposée par la température de fusion élevée de ces polymères. Parmi ceux-ci, on peut citer le polyamide-6, le polyamide-6,6 et certaines polycétones compte tenu des problèmes de plastification qu'ils posent en vertu de leur température de fusion élevée. Les polycétones dont il est question ici sont des produits de condensation du monoxyde de carbone avec des oléfines aliphatiques, par exemple le produit de condensation du monoxyde de carbone avec l'éthène et le propène. Ces polycétones sont bien connues dans l'état de la technique (de façon non limitative, on peut citer par exemple les brevets EP 485.058, EP 213.671, EP 121.965). Les polyamides-4,6, -6,9, -6,10, -6,12 et MDX-6 sont également concernés par la présente invention. D'autres polymères semi-cristallins, comme le polyamide-11, le polyamide-12, le polyoxyméthylène et le fluorure de polyvinylidène peuvent également être avantageusement plastifiés par les sulfonamides aromatiques de formule (I).

Parmi les sulfonamides aromatiques de formule (I) liquides (L) ou solides (S) à température ambiante comme spécifié ci-dessous, les produits suivants, avec les abréviations qu'on leur a attribuées, peuvent être cités:

| | | |
|---|---|---|
| AS: N-(2-hydroxyéthyl)benzènesulfonamide | C₆H₅SO₂NH(CH₂)₂OH | (L) |
| AY: N-(3-hydroxypropyl)benzènesulfonamide | C₆H₅SO₂NH(CH₂)₃OH | (L) |
| BC: N-(2-hydroxyéthyl)-p-toluènesulfonamide | CH₃C₆H₄SO₂NH(CH₂)₂OH | (S) |
| BE: N-(4-hydroxyphényl)benzènesulfonamide | C₆H₅SO₂NHC₆H₄OH | (S) |
| BF: N-[(2-hydroxy-1-hydroxyméthyl-1-méthyl)éthyl]benzènesulfonamide | | |
| | C₆H₅SO₂NHC(CH₃)(CH₂OH)CH₂OH | (L) |
| BG: N-(5-hydroxy-1,5-diméthylhexyl)benzènesulfonamide | C₆H₅SO₂NHCH(CH₃)(CH₂)₃C(CH₃)₂OH | (S) |
| BH: N-(2-acétoxyéthyl)benzènesulfonamide | C₆H₅SO₂NH(CH₂)₂OCOCH₃ | (S) |
| BI: N-(5-hydroxypentyl)benzènesulfonamide | C₆H₅SO₂NH(CH₂)₅OH | (L) |
| BK: N-[2-(4-hydroxybenzoyloxy)éthyl]benzènesulfonamide | C₆H₅SO₂NH(CH₂)₂OCOC₆H₄OH | (S) |
| BL: N-[2-(4-méthylbenzoyloxy)éthyl]benzènesulfonamide | C₆H₅SO₂NH(CH₂)₂OCOC₆H₄CH₃ | (S) |
| BJ: N-(2-hydroxyéthyl)-p-méthoxybenzènesulfonamide | CH₃OC₆H₄SO₂NH(CH₂)₂OH | (S) |
| BM: N-(2-hydroxypropyl)benzènesulfonamide | C₆H₅SO₂NHCH₂CH(CH₃)OH | (L) |

Les avantages apportés par les sulfonamides aromatiques de formule (I) dans la plastification des polymères semi-cristallins sont nombreux. Parmi ceux-ci, on peut citer:
- la grande stabilité thermique de ces sulfonamides permet de les incorporer à des polymères à température élevée sans qu'ils ne se volatilisent de façon sensible ce qui évite des pertes du produit et une pollution atmosphérique; ils ne se décomposent pas à température élevée ce qui évite une coloration inacceptable du polymère et leur permet de jouer leur rôle de plastifiant puisqu'ils restent présents intacts dans le polymère. En conséquence, il est désormais possible d'utiliser ces nouveaux plastifiants pour des techniques de mise en oeuvre (moulage par injection, extrusion, extrusion soufflage, rotomoulage, etc.) à des températures élevées et avec des temps de contact tels que les plastifiants connus dans l'état de la technique sont proscrits du fait de leur volatilité et/ou leur dégradation à ces températures.
- leur grande compatibilité avec les polymères précités favorise également le développement de leurs propriétés plastifiantes.
- leur effet plastifiant se traduit par une diminution importante du couple mécanique développé par le milieu fondu en cours de mélange du plastifiant avec le polymère ainsi que lors de toute mise en oeuvre de ces compositions ce qui représente une diminution importante de l'énergie à utiliser lors de ces opérations; l'effet plastifiant se traduit également par un abaissement de la température de transition vitreuse ce qui entraîne une diminution de la rigidité des articles obtenus au départ de ces compositions que l'on peut mesurer par l'abaissement du module élastique, déterminé par le test de traction (norme ISO 527-1 et 527-2) et par une amélioration de la résistance au choc (mesurable, par exemple, par le test connu sous le nom de "Notched IZOD impact." selon la norme ISO 180).

Certains sulfonamides aromatiques répondant à la formule (I) ont déjà été utilisés comme plastifiants de polymères.

Le brevet US 3.748.296 décrit des sulfonamides aromatiques mono- ou disubstitués sur l'atome d'azote par des groupes alkyles pouvant être eux-mêmes substitués par un groupe hydroxyle, alkoxy ou acyloxy. Ces produits sont utilisés, comme plastifiants, pour des polyuréthannes uniquement.

Le brevet US 2.201.028 décrit également des sulfonamides aromatiques mono- ou disubstitués sur l'atome d'azote par des groupes alkyles porteurs de groupes hydroxyles. Ces composés sont utilisés comme plastifiants, uniquement pour des résines urée-formaldéhyde, seules ou en mélange avec des polymères cellulosiques.

Le brevet GB 455.694 décrit lui aussi des sulfonamides aromatiques mono- ou disubstitués sur l'atome d'azote par des groupes alkyles porteurs de groupes ester ou hydroxyle, comme plastifiants pour des éthers et des esters de cellulose uniquement. L'article de D. AELONY dans Ind. Engineer. Chem., 46, pp. 587-591 (1954) décrit des esters du même type que ceux du brevet GB 455.694 comme plastifiants pour les seules résines vinyliques.

Le brevet US 2.292.464 propose des N-hydroxyalkyl-N-aryl-arylsulfonamides comme plastifiants pour divers polymères, essentiellement pour les dérivés cellulosiques; les polyamides sont cités parmi ces polymères, sans plus de détails. En pratique, les sulfonamides disubstitués sur l'atome d'azote de ce brevet ont des propriétés plastifiantes nettement inférieures à celles de sulfonamides aromatiques monosubstituées sur l'atome d'azote de formules (I) pour les polymères semi-cristallins à température de fusion élevée, selon la présente invention.

Enfin, la demande de brevet JP 2-221467 décrit des adhésifs pour des pièces de textile, constitués d'un mélange d'un benzènesulfonamide N-hydroxyalkylé et d'une résine fusible à chaud contenant un polyamide; ces adhésifs sont utilisables à 130°C.

Comme cela est bien connu de l'homme de métier, il n'est pas possible de prévoir quelles seront les propriétés d'un composé qui est un bon plastifiant pour un polymère donné lorsque l'on tente de s'en servir comme plastifiant pour un polymère de nature très différente. Par ailleurs, aucun des documents susmentionnés n'aborde la question de la plastification de polyamides semi-cristallins qui ne peuvent être travaillés qu'à des températures élevées, ni n'expose les problèmes que cela entraîne, pas plus que les solutions à y apporter.

Des sulfonamides aromatiques différents de ceux de formule (I) ont déjà été proposés comme plastifiants de polyamides à température de fusion élevée, tels que les polyamides-6, -6,6, etc. C'est ainsi que dans le brevet US 2.499.932, on propose les produits de réaction d'alcools avec des N-alkylolarylsulfonamides comme plastifiants de ces polyamides. Ces produits de réaction seraient des éthers de N-alkylolarylsulfonamides mais des condensations en cours de synthèse de ces produits pourraient donner naissance à des molécules plus complexes qu'un simple éther; les exemples donnés de ces produits sont tous des éthers d'alkyle en C₁-C₈ de N-méthyloltoluènesulfonamides. En fait, la stabilité thermique de ce type de composé est beaucoup moins bonne que celle des sulfonamides aromatiques de formule (I) comme on peut le voir à l'exemple 2 ci-dessous. Dans le brevet US 2.244.183, on propose comme plastifiant des mêmes polyamides, des résines résultant de la condensation du formaldéhyde avec des toluène- ou cyclohexanesulfonamides, éventuellement substitués par un groupe alkyle sur l'atome d'azote. Ces résines ont un effet plastifiant bien moindre que les sulfonamides aromatiques de formule (I).

La synthèse des sulfonamides aromatiques de formule (I) peut être effectuée de manière classique en faisant réagir du chlorure de benzènesulfonyle, éventuellement substitué sur le noyau benzénique par un groupe R₁ selon la formule (I), avec une amine de formule NH₂-X-Y, dans laquelle X a la signification donnée plus haut et Y représente un groupe hydroxyle, à chaud dans l'eau ou dans un solvant inerte tel que le benzène ou le toluène, en présence d'une base comme l'hydroxyde de sodium, la pyridine ou l'amine NH₂-X-Y en excès; de préférence, on ajoute le chlorure de benzènesulfonyle goutte à goutte à l'amine en solution aqueuse ou organique, en veillant à ce que le pH ne descende pas sous la valeur de 9. Lorsque Y représente un groupe -O-CO-R₂, R₂ ayant la signification donnée ci-dessus, on estérifie un benzènesulfonamide hydroxylé obtenu comme décrit ci-avant avec l'acide carboxylique ou l'anhydride correspondant à ce groupe Y, de manière catalytique ou non. Beaucoup d'exemples de ce type de synthèse sont donnés dans la littérature, par exemple dans l'article de D. AELONY susmentionné.

L'isolement du produit fini s'effectue selon les techniques bien connues de l'homme de l'art, par exemple, par extraction avec un tiers solvant choisi parmi les hydrocarbures aromatiques ou cycloaliphatiques, les esters ou cétones aliphatiques ou encore des solvants chlorés tels que le chloroforme. La technique d'isolement sera fonction de la solubilité du produit synthétisé.

La quantité du sulfonamide aromatique de formule (I) utilisée selon la présente invention dépend du polymère concerné, de son application industrielle et varie le plus souvent de 2% à 30% et de préférence de 5% à 20% en poids par rapport au poids total de la composition.

Diverses techniques sont utilisables pour introduire le sulfonamide aromatique de formule (I) dans le polymère semi-cristallin, selon la présente invention. La technique la plus classique consiste à mélanger le plastifiant et le polymère à l'état fondu. Industriellement, la méthode la plus utilisée pour ce faire est l'extrusion. Un sulfonamide aromatique de formule (I) se présentant sous forme liquide à température ambiante sera introduit de manière adéquate par le biais d'une pompe doseuse dans la zone d'alimentation de l'extrudeuse simultanément aux granules de polymère, le débit de la pompe doseuse étant ajusté de telle façon à fournir en sortie d'extrudeuse un jonc de la composition désirée. Si le sulfonamide aromatique de formule (I) se présente sous forme solide à température ambiante, on procédera au préalable à un mélange à sec des granules de polymère avec la quantité adéquate du produit précité. Les granules de polymère ainsi enrobés de plastifiant seront ensuite introduits dans la zone d'alimentation de l'extrudeuse. Pour les sulfonamides aromatiques à bas point de fusion, il est possible d'alimenter l'extrudeuse en plastifiant à l'état fondu (liquide) par le biais d'une pompe équipée à cet effet. A l'échelle du laboratoire, on utilisera de manière commode un malaxeur thermostatisé dans lequel tournent des couteaux d'acier qui homogénéisent la composition à l'état fondu, les granules de polymère et le plastifiant ayant été préalablement mélangés à sec.

Enfin, il est également possible d'obtenir les compositions selon l'invention en introduisant le sulfonamide de formule (I) dans le réacteur où l'on réalise la synthèse du polymère, soit dès le début de cette synthèse, soit au cours ou à la fin de celle-ci.

Les compositions selon l'invention peuvent en outre comprendre des additifs habituels pour les polymères semi-cristallins, tels que des renforçateurs de chocs, des charges minérales, des anti-oxydants, des anti-UV, des auxiliaires de mise en oeuvre tels que des agents de démoulage, etc.

Les compositions selon l'invention se prêtent à la fabrication de pièces finies obtenues par des procédés comme l'extrusion et le moulage par injection dans lesquels le polymère plastifié est travaillé à l'état fondu. Parmi les articles ainsi fabriqués on peut citer les câbles pour freins hydrauliques, les conduites, les tubes, les réservoirs et autres pièces d'ingénierie.

Compte tenu de l'excellente plastification des polymères visés par la présente invention, il est maintenant possible d'envisager d'utiliser ceux-ci pour ces mêmes applications, dans des conditions de mise en oeuvre aisée, ce qui n'était pas possible auparavant.

Les exemples qui suivent illustrent l'invention sans la limiter.

### Exemple 1: Synthèse de sulfonamides aromatiques de formule (I).

### (a) N-(2-hydroxyéthyl)benzènesulfonamide (AS).

Dans un réacteur de 1 litre, muni d'un manteau double thermostatisé, d'un agitateur et d'une ampoule à brome, on introduit 128,3 g de 2-éthanolamine (2,1 moles) et 150 g d'eau. On introduit 353 g de chlorure de benzènesulfonyle (2 moles) dans l'ampoule à brome. On chauffe le réacteur vers 60°C et on laisse alors couler goutte à goutte le chlorure de benzènesulfonyle dans le réacteur, à raison d'environ 3 ml/min. L'exothermicité de la réaction est ainsi contrôlée et la température évolue pour atteindre 70 à 75°C en fin d'ajoute. Par addition progressive d'une solution d'hydroxyde de sodium à 20% dans l'eau, on évite que le pH ne descende en dessous de 9. Après quelques heures, la réaction est terminée. On extrait alors le mélange réactionnel par un tiers solvant insoluble dans l'eau tel que l'acétate d'éthyle. Cette phase organique est recueillie. La phase aqueuse est à nouveau extraite et l'ensemble des phases organiques est distillé sous vide afin d'éliminer le solvant d'extraction. On obtient ainsi 384 g de N-(2-hydroxyéthyl) benzènesulfonamide, soit un rendement de 95,5% avec une pureté supérieure à 99%. Ce produit, qui est liquide à température ambiante, est caractérisé par spectroscopies IR et RMN, ainsi que par analyse GC et HPLC.

### (b) N-(3-hydroxypropyl)benzènesulfonamide (AY).

On procède comme à l'exemple 1(a) au départ de 353 g de chlorure de benzénesulfonyle (2 moles) et de 157,7 g de 3-amino-1-propanol (2,1 moles).
La quantité obtenue est de 406,7 g, soit un rendement de 99,5%.

### (c) N-(2-hydroxyéthyl)-p-toluènesulfonamide (BC).

On procède comme à l'exemple 1(a) mais on utilise cette fois pour la réaction 381,3 g de chlorure de p-toluènesulfonyle (2 moles) et 128,3 g d'éthanolamine (2,1 moles).
La quantité obtenue est de 400,8 g, soit un rendement de 94,8%.

### (d) N-(4-hydroxyphényl)benzènesulfonamide (BE).

On procède comme à l'exemple 1(a) au départ de 353 g (2 moles) de chlorure de benzènesulfonyle et 229,2 g de 4-aminophénol (2,1 moles).
La quantité obtenue est de 507,9 g, soit un rendement de 97,3%.

### (e) N-[(2-hydroxy-1-hydroxyméthyl-1-mèthyl)éthyl]benzènesulfonamide (BF).

On procède comme à l'exemple 1(a) au départ de 353 g (2 moles) de chlorure de benzènesulfonyle et 220,8 g de 2-amino-2-méthyl-1,3-propanediol (2,1 moles).
La quantité obtenue est de 475,7 g, soit un rendement de 97%.

### (f) N-(5-hydroxy-1,5-diméthylhexyl)benzénesulfonamide (BG).

On procède dans ce cas à la neutralisation du chlorhydrate du 6-amino-2-méthyl-2-heptanol (381,6 g, soit 2,1 moles) que l'on fait réagir avec 353 g de chlorure de benzénesulfonyle (2 moles) selon l'exemple 1(a).
Rendement: 563,8 g, soit 98,8%.

### (g) N-(2-acétoxyéthyl)benzènesulfonamide (BH).

Dans un ballon à 3 cols de 500 ml, on introduit 102,1 g d'anhydride acétique puis on ajoute goutte à goutte 201,1 g du sulfonamide comme obtenu à l'exemple 1(a).
On laisse réagir pendant 3 heures à 60-70°C. On laisse refroidir à température ambiante et on verse le mélange réactionnel dans 400 ml d'eau, ce qui fait précipiter le produit recherché. On le filtre et on le lave jusqu'à neutralité des eaux de lavage.
Rendement: 239,5 g, soit 98,5%.

### (h) N-(5-hydroxypentyl)benzènesulfonamide (BI).

On procède comme à l'exemple 1(a) au départ de 353 g (2 moles) de chlorure de benzènesulfonyle et de 216,6 g (2,1 moles) de 5-amino-1-pentanol.
Rendement: 476,8 g, soit 98%.

### (i) N-(2-hydroxyéthyl)-p-méthoxybenzènesulfonamide (BJ).

On procède comme à l'exemple 1(a) au départ de 413,3 g (2 moles) de chlorure de p-méthoxybenzènesulfonyle et de 128,3 g (2,1 moles) d'éthanolamine.
Rendement: 439,3 g, soit 95%.

### Exemple 2: Stabilité thermique des plastifiants.

a) On a appliqué la technique de thermogravimétrie pour évaluer la stabilité thermique de sulfonamides aromatiques de formule (I), ainsi que, à titre de comparaison, d'autres sulfonamides aromatiques. Pour ce faire, on a mesuré la perte de poids des échantillons qui ont été soumis à un chauffage préalable croissant de 10°C par minute, en partant de 30°C jusqu'à 220°C et ensuite maintenus en isotherme à cette température pendant 30 minutes. Deux autres séries d'analyses ont été réalisées avec des isothermes finaux à 270 et 300°C. Ces analyses ont été réalisées dans un appareil de thermogravimétrie du type Perkin-Elmer TGA 7. Les résultats sont repris au Tableau I, dans lequel:
- la première colonne indique la nature du plastifiant par une abréviation explicitée en bas du tableau;
- les colonnes suivantes indiquent les % résiduels en poids par rapport aux quantités mises en oeuvre, engagées initialement à 30°C, aux températures indiquées et pour les durées exprimées en minutes, en isotherme, ce qui illustre la stabilité thermique du plastifiant considéré. Les durées de 2 et 5 minutes ont été choisies arbitrairement, l'isotherme étant maintenu pendant 30 minutes.

**Tableau I**

| Plastifiant | 220°C | | 270°C | 300°C |
|---|---|---|---|---|
| | 2' ISOTH. | 5' ISOTH. | 2' ISOTH. | 2' ISOTH. |
| AS | 97 | 94 | 66 | 28 |
| AY | 96 | 92 | 2 | 1 |
| BE | 99 | 97 | 65 | 48 |
| BG | 87 | 74 | 15 | 8 |
| BF | 98 | 97 | 88 | 47 |
| BH | 85 | 75 | 29 | 6 |
| BI | 94 | 91 | 69 | 65 |
| BJ | 99 | 98 | 69 | 0 |
| BL | 99 | 98 | 92 | 76 |
| BM | 98 | 96 | 86 | 60 |
| EHPB * | 82 | 69 | 0 | 0 |
| EBSA * | 10 | 0 | 0 | 0 |
| BBSA * | 70 | 49 | 0 | 0 |
| BD * | 76 | 59 | - | - |
| AN * | 93 | 89 | 20 | 6 |
| BA * | 67 | 43 | 0 | 0 |
| AU * | 89 | 83 | 64 | 32 |
| AT * | 91 | 82 | 40 | 38 |

Dans le tableau I, les plastifiants marqués "*" sont donnés à titre de comparaison. Les abréviations des plastifiants ont la signification suivante:

| | |
|---|---|
| AS | N-(2-hydroxyéthyl)benzenesulfonamide |
| AY | N-(3-hydroxypropyl)benzènesulfonamide |
| BE | N-(4-hydroxyphènyl)benzènesulfonamide |
| BG | N-(5-hydroxy-1,5-diméthylhexyl)benzènesulfonamide |
| BF | N-[(2-hydroxy-1-hydroxyméthyl-1-méthyl)éthyl]benzènesulfonamide |
| BH | N-(2-acétoxyéthyl)benzènesulfonamide |
| BI | N-(5-hydroxypentyl)benzènesulfonamide |
| BJ | N-(2-hydroxyéthyl)-p-méthoxybenzènesulfonamide |
| BL | N-[2-(4-méthylbenzoyloxy)éthyl]benzènesulfonamide |
| BM | N-(2-hydroxypropyl)benzènesulfonamide |
| EHPB* | p-hydroxybenzoate de 2-éthylhexyle |
| EBSA* | N-éthylbenzènesulfonamide |
| BBSA* | N-n-butylbenzènesulfonamide |
| BD* | N-n-butyl-p-toluènesulfonamide |
| AN* | N-butyl-p-méthoxybenzènesulfonamide |
| BA* | N-(3-méthoxypropyl)benzénesulfonamide |
| AU* | N-éthyl-N-(2-hydroxyéthyl)benzènesulfonamide |
| AT* | N,N,di-(2-hydroxyéthyl)benzénesulfonamide |

Ce tableau indique clairement que les sulfonamides aromatiques AS, AY, BE, BG, BF, BH, BI, BJ, BL, BM et BO, qui répondent à la formule (I), résistent mieux à la dégradation et/ou à la volatilisation due à la chaleur que les sulfonamides aromatiques tels que EBSA, BBSA, AN et BD, qui comportent une chaîne alkyle non substituée attachée à l'atome d'azote. Le EHPB, un autre plastifiant connu dans l'état de la technique, montre clairement un manque de stabilité à 270°C et 300°C.

Le sulfonamide aromatique BA, qui comporte une chaîne méthoxypropyle attachée à l'atome d'azote, ne résiste pas non plus à la chaleur. Par contre, les sulfonamides aromatiques AT et AU, qui portent deux substituants éthyle attachés à l'atome d'azote, dont l'un au moins comporte un groupe hydroxyle, résistent bien à la chaleur, mais leurs propriétés plastifiantes laissent à désirer, comme l'essai suivant le montre.
b) L'obtention des pièces en polyamide-12 (PA-12) s'est faite en deux étapes. Dans une première étape, des granulés de polyamide-12 commercial (VESTAMID® L 1700 produit par Hüls) sont séchés sous vide à 100°C pendant 8 heures. Dans une deuxième étape, les granules du polyamide préalablement imprégnés de plastifiant ont été malaxés dans un plastographe BRABENDER pendant 5 minutes à 220°C, sous une vitesse d'agitation de 40 tours par minute et sous atmosphère d'azote. Le matériau ainsi obtenu a ensuite été mis en forme dans un moule de dimensions (150 x 150 x 1) mm à 220°C sous une pression de 15 tonnes. Les plaques sortant du moule sont usinées en barrettes rectangulaires de 50 mm de long sur 5 mm de large et 1 mm d'épaisseur. On évalue le module réel à une température de 20°C, à une fréquence de 1 Hz, sous 0,1% de déformation, dans un appareil RHEOMETRICS RSA-2 SOLID ANALYZER.

Les résultats sont repris au Tableau II, dans lequel
- la première colonne indique la nature des constituants des compositions testées (PA, AS, AT et AU ont la signification donnée plus haut);
- la deuxième colonne indique le pourcentage en poids du plastifiant introduit dans les compositions, par rapport au poids total de celles-ci;
- la troisième colonne donne le module réel, en MPa.

**Tableau II**

| Nature des compositions | Quantité de plastifiant | Module réel, en MPa |
|---|---|---|
| PA-12 | 0% | 1760 |
| PA-12 + AS | 5% | 1170 |
| PA-12 + AS | 15% | 540 |
| PA-12 + AT * | 5% | 1600 |
| PA-12 + AT * | 15% | 900 |
| PA-12 + AU * | 5% | 1400 |
| PA-12 + AU * | 15% | 810 |
| PA 12: VESTAMID® L 1700 Naturfarben Hüls. | | |

Les compositions marquées "*" sont testées à titre de comparaison.
Ce tableau montre que les benzènesulfonamides aromatiques AT et AU, où l'atome d'azote porte 2 substituants, ont des propriétés plastifiantes nettement moins bonnes que l'AS, qui répond à l'invention.

### Exemple 3: Indice de fluidité.

On a préparé des échantillons de compositions contenant un polyamide semi-cristallin et un sulfonamide aromatique comme plastifiant, en mélangeant ces deux constituants dans une extrudeuse corotative Werner-Pfleiderer ZSK-30, à la température de mise en oeuvre du polyamide sous une vitesse de rotation des vis de 110 trs/min., soit 220°C pour le polyamide-12 (de la marque VESTAMID® L 1700, produit par HÜLS contenant 1% de master batch noir), et 260°C pour le polyamide-6 (de la marque ULTRAMID® B-3, produit par BASF). Le plastifiant liquide est introduit en tète de l'extrudeuse par le biais d'une pompe doseuse de marque MILTON-ROY "A" (A 29 F 1 H). Ensuite, les joncs de polyamide plastifié ainsi obtenus sont refroidis par immersion dans de l'eau à température ambiante. Ils sont alors granulés et séchés, dans un coffret ventilé, à 50°C pendant 8 heures. Les granulés ainsi séchés ne contiennent pas plus de 0,2% d'eau. Ces granulés sont immédiatement placés à l'abri de l'humidité ambiante dans des sacs scellés, en attente des tests.
L'indice de fluidité a été déterminé selon la norme ASTM D 1238 pour des échantillons de polyamide-12 sans plastifiants, ainsi qu'avec des quantités croissantes de BBSA et de AS (la signification de ces abréviations est donnée plus haut), à 220°C et sous une pression de 5 kg. La même détermination a été effectuée pour du polyamide-6 seul, ainsi qu'avec des quantités croissantes de AS, à 260°C et sous une pression de 5 kg. L'appareil utilisé pour ces déterminations est un DAVENPORT MELT FLOW RATE APPARATUS (Modèle 4). Les résultats sont donnés dans le Tableau IV, dans lequel:
- la première colonne indique la nature des constituants des compositions testées (PA, BBSA et AS ont la signification donnée plus haut);
- la deuxième colonne indique le pourcentage en poids du plastifiant introduit dans les compositions, par rapport au poids total de celles-ci;
- la troisième colonne donne l'indice de fluidité des compositions, en g par 10 minutes, les chiffres entre parenthèses indiquant la déviation standard des essais;
- la quatrième colonne donne les conditions de température et de pression des essais.

**Tableau III**

| Nature des compositions | Quantité de plastifiant | Indice de fluidité (g/10 min.) | | Conditions |
|---|---|---|---|---|
| PA-12 | 0% | 6,32 | (0,03) | |
| PA-12 + BBSA * | 5% | 8,18 | (0,04) | 220°C, 5kgs |
| PA-12 + BBSA * | 15% | 15,8 | (0,4) | |
| PA-12 + AS | 5% | 8,1 | (0,2) | 220°C, 5kgs |
| PA-12 + AS | 15% | 12,8 | (0,2) | |
| PA-6 | 0% | 22,4 | (0,3) | |
| PA-6 + AS | 5% | 32,8 | (0,4) | 260°C, 5kgs |
| PA-6 + AS | 15% | > 50 | | |

Les compositions marquées "*" sont testées à titre de comparaison.

| | |
|---|---|
| PA 12 | VESTAMID® L 1700 Hüls |
| PA 6 | ULTRAMID® B-3 BASF |

Les résultats du Tableau III montrent que l'effet de l'AS est comparable à celui du BBSA dans un polyamide-12, en ce qui concerne l'augmentation de l'indice de fluidité des compositions qui les contiennent. Par ailleurs, l'introduction d'AS dans du polyamide-6 provoque une augmentation de l'indice de fluidité encore plus importante que pour le polyamide-12. Cette augmentation de l'indice de fluidité traduit dans tous les cas une diminution de la viscosité, à l'état fondu, ce qui est une des propriétés attendue d'un plastifiant.

### Exemple 4: Test de résistance à l'impact après entaille. (NOTCHED IZOD IMPACT).

Les échantillons utilisés dans ce test ont été obtenus de la manière suivante: Des granules de polyamides obtenus comme dans l'exemple 3 sont alimentés dans une presse à injection BUHLER ROVER 63B où la composition est traitée à la même température que lors de l'extrusion. Les pièces moulées fournies par la presse à injection sont immédiatement placées à l'abri de l'humidité ambiante dans l'attente des tests de résistance à l'impact après entaille décrits ci-dessous selon la norme ISO 180. Les résultats sont repris au Tableau IV, dans lequel:
- la première colonne indique la nature des constituants des compositions testées (PA, BBSA et AS ont la signification donnée plus haut);
- la deuxième colonne indique le pourcentage en poids du plastifiant introduit dans les compositions, par rapport au poids total de celles-ci;
- la troisième colonne donne la valeur de la résistance à l'impact après entaille, en kJ/m², suivi du sigle "CB" si l'échantillon s'est brisé en 2 fragments séparés, ou du sigle "NB" si l'échantillon ne s'est pas rompu complètement; les chiffres entre parenthèses donnent la déviation standard. Le test est effectué à la température de 23°C.

**Tableau IV**

| Nature des compositions | Quantité de plastifiant | Résistance à l'impact IZOD (kJ/m²) | | |
|---|---|---|---|---|
| PA-12 | 0% | 9,2 | (0,5) | CB |
| PA-12 + BBSA * | 5% | 10,2 | (0,8) | CB |
| PA-12 + BBSA * | 15% | | | NB |
| PA-12 + AS | 5% | 11 | (2) | CB |
| PA-12 + AS | 15% | | | NB |
| PA-6 ⁽ⁱ⁾ | 0% | 4,4 | (0,2) | CB |
| PA-6 + AS | 5% | 4,5 | (0,1) | CB |
| PA-6 + AS | 15% | 20 | (1) | CB |
| PA-6 ⁽ⁱⁱ⁾ | 0% | 4,2 | (0,1) | CB |
| PA-6 + AS | 5% | 3,8 | (0,2) | CB |
| PA-6 + AS | 15% | 8,2 | (0,5) | CB |
| PA-6 + BH | 5% | 3,6 | (0,2) | CB |
| PA-6 + BH | 15% | 6,1 | (0,3) | CB |

Les compositions marquées "**" sont testées à titre de comparaison.

| | |
|---|---|
| PA 12 | VESTAMID® L 1700 Naturfarben Hüls avec master batch noir (1%) |
| (i) PA-6 | ULTRAMID® B-3 Natur BASF avec master batch noir (1%) |
| (ii) PA-6 | ULTRAMID® B-35W Schwarz BASF |

Les résultats du tableau IV montrent que la résistance à l'impact après entaille IZOD augmente dans la même mesure pour le polyamide-12, qu'il soit mélangé avec les mêmes quantités de AS que de BBSA. Cette résistance à l'impact augmente également pour le polyamide-6, contenant 15% d'AS, ou de BH, ce qui traduit bien l'effet plastifiant de ces benzènesulfonamides.

### Exemple 5: Tests de traction sur des compositions de polyamides.

On a évalué les propriétés mécaniques des échantillons cités à l'exemple 4 ainsi que d'autres préparés dans les mêmes conditions. En appliquant la norme ISO 527-1 sur des éprouvettes d'essais de type 1 BA (ISO 527-2), on a évalué le module d'élasticité, les contraintes d'écoulement et à la rupture, ainsi que l'élongation à l'écoulement et à la rupture, Pour ce faire, on a utilisé une vitesse d'étirement de 50 mm par minute. Les résultats sont repris au Tableau V. Dans ce tableau:
- la première colonne indique la nature des constituants des compositions testées (PA, BBSA et AS ont la signification donnée plus haut), et la quantité de plastifiant;
- la deuxième colonne donne la valeur du module d'élasticité, en MPa;
- la troisième colonne donne la valeur de la contrainte à l'écoulement, en MPa; pour les cases vierges, aucune valeur distincte n'a pu être déterminée;
- la quatrième colonne donne la valeur de l'élongation à l'écoulement, en %; pour les cases vierges, aucune valeur distincte n'a pu être déterminée;
- la cinquième colonne donne la contrainte à la rupture, en MPa;
- la sixième colonne donne l'élongation à la rupture, en %.

Dans tout le Tableau V, les chiffres entre parenthèses indiquent les déviations standard.

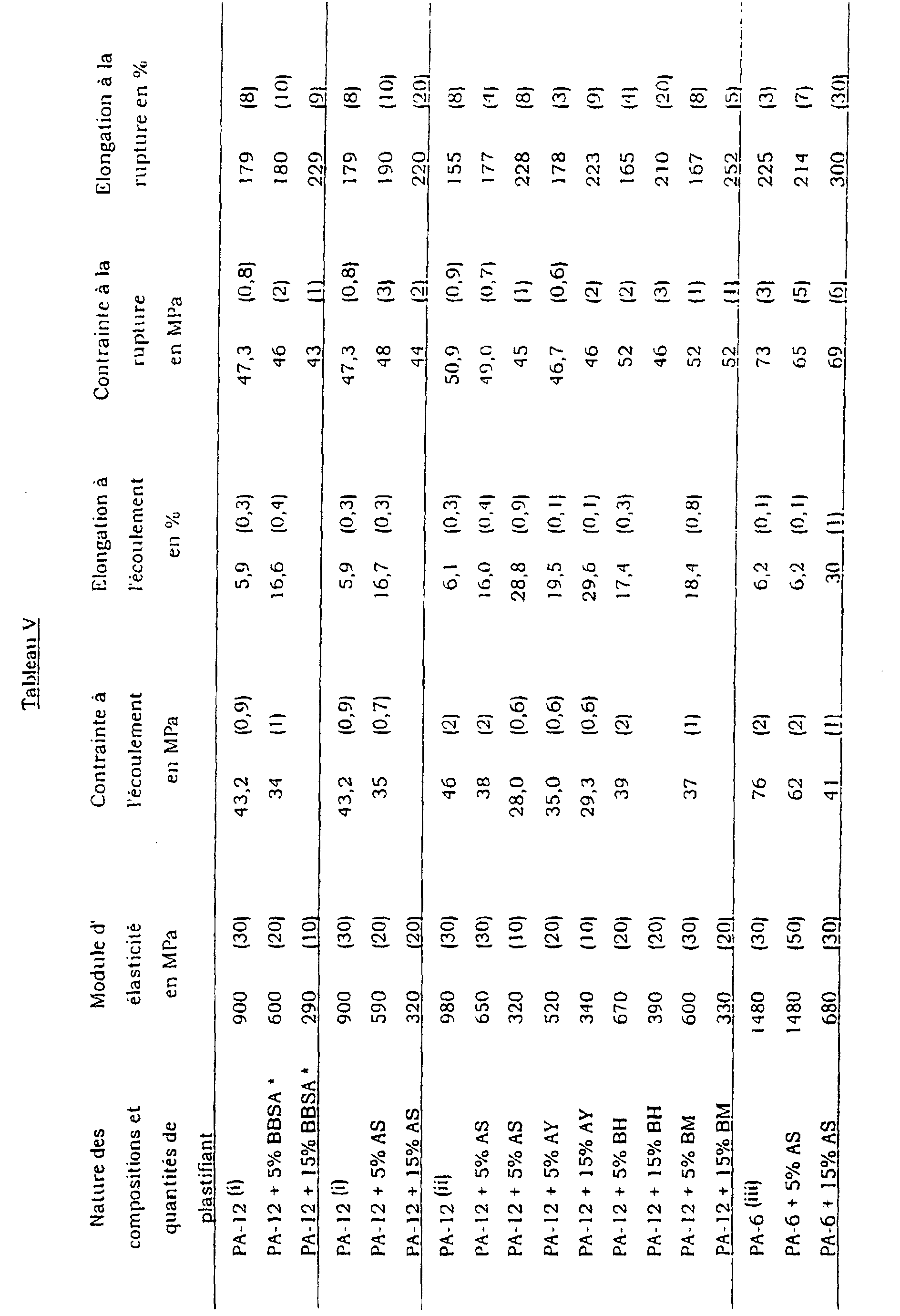

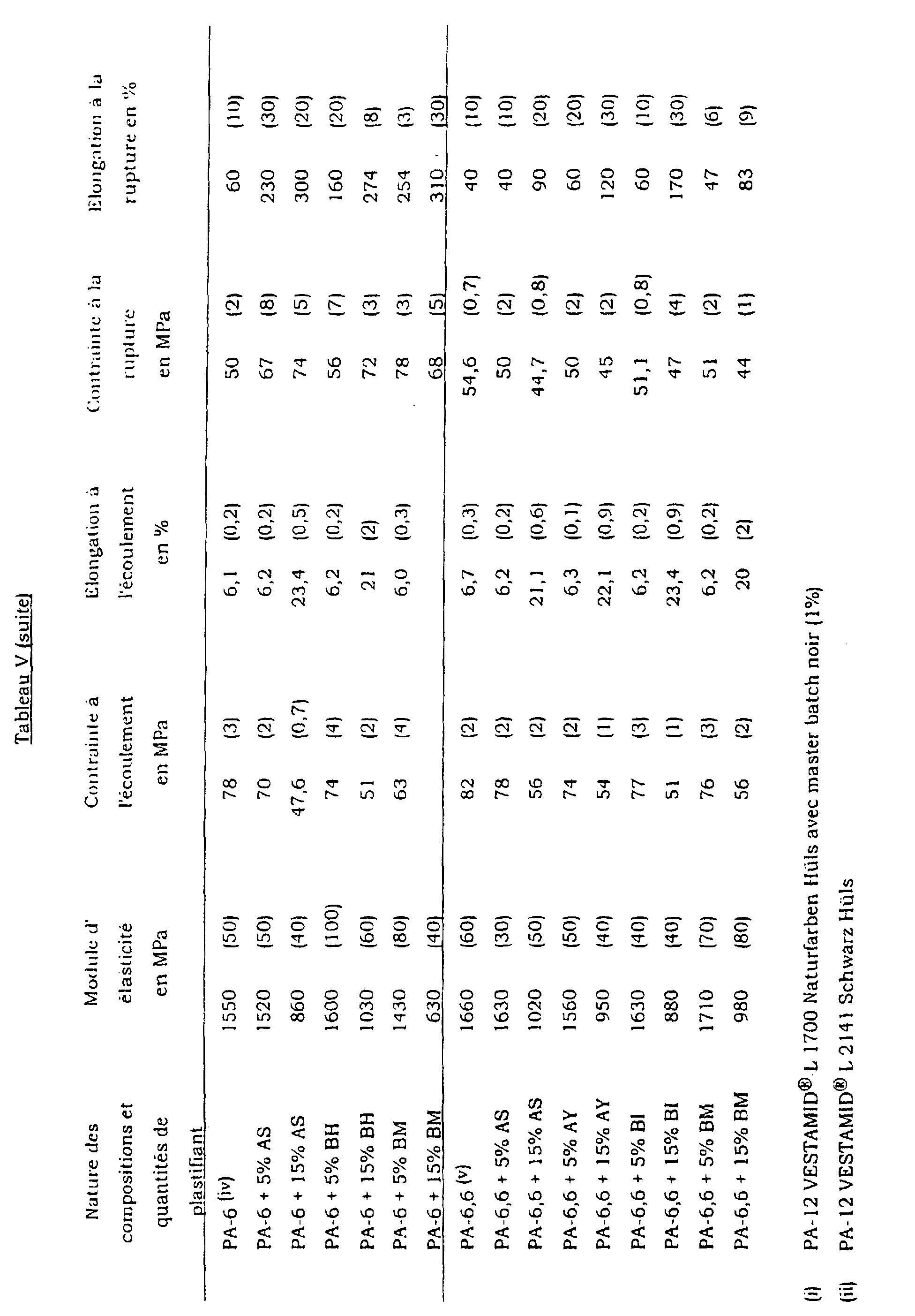

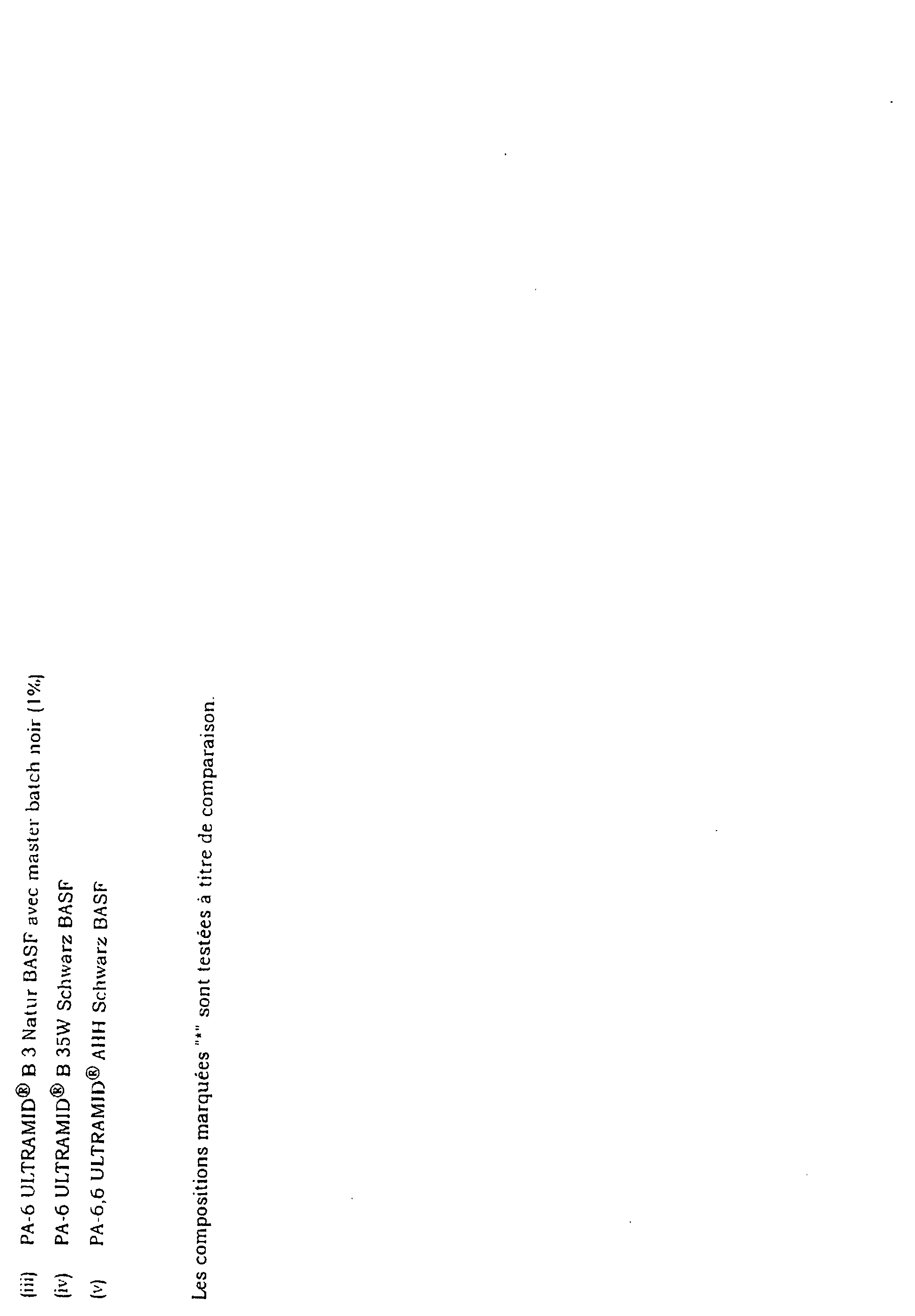

Les résultats du Tableau V montrent que l'effet plastifiant de sulfonamides sur le polyamide 12 est identique à celui du BBSA en ce sens qu une chute continuelle du module d'élasticité est observée suite à l'incorporation des plastifiants susmentionnés. Le module chute de 2/3 de sa valeur en présence de 15% de plastifiant. Parallèlement, l'élongation à la rupture augmente. D'autre part, ces produits montrent également un effet plastifiant appréciable sur le polyamide-6 et 6,6 en ce sens que leurs modules d'élasticité chutent de manière conséquente. Leurs élongations à la rupture augmentent comme dans le cas précédent.
L'homme de l'art reconnaîtra dans les autres valeurs citées dans le tableau les caractéristiques propres aux effets plastifiants bien connus dans l'état de la technique.

### Exemple 6: Tests de traction sur des compositions d'une polycétone.

On a évalué les propriétés mécaniques d'échantillons préparés comme à l'exemple 2 à une température de mise en oeuvre de 250°C. La polycétone utilisée est le produit de réaction d'un mélange de monoxyde de carbone, d'éthène et de propène, préparé comme décrit dans l'exemple 1 de la demande de brevet EP 485.058. En appliquant la norme ISO 527-1 sur des éprouvettes d'essais de type 5 A obtenues par emboutissement de la plaque roulée (ISO 527-2), on a évalué le module d'élasticité, les contraintes d'écoulement, ainsi que l'élongation à l'écoulement, à température ambiante. Pour ce faire, on a utilisé une vitesse d'étirement de 50 mm par minute. Les résultats sont repris au Tableau VI. Dans ce tableau:
- la première colonne indique la nature des constituants des compositions testées (PC représente la polycétone, BBSA et AS ont la signification donnée plus haut), et la quantité de plastifiant:

- la deuxième colonne donne la valeur du module d'élasticité, en MPa;
- la troisième colonne donne la valeur de la contrainte à l'écoulement, en MPa;
- la quatrième colonne donne la valeur de l'élongation à l'écoulement, en %.

Dans tout le Tableau VI, les chiffres entre parenthèses indiquent les déviations standard.

**Tableau VI**

| Nature des compositions et quantité de plastifiant | Module d'élasticité (MPa) | | Contrainte à l'écoulement (MPa) | | Elongation à l'écoulement (%) | |
|---|---|---|---|---|---|---|
| PC | 1840 | (30) | 70 | (2) | 14,2 | (0,5) |
| PC + 15% BBSA* | 760 | (10) | 45,1 | (0,5) | 25,4 | (0,5) |
| PC + 15% AS | 700 | (20) | 42,8 | (0,7) | 24 | (2) |

| | | | | | | |
|---|---|---|---|---|---|---|
| * Composition testée à titre de comparaison. | | | | | | |

Les résultats du Tableau VI montrent que l'effet du AS sur la polycétone est un peu meilleur que celui du BBSA, en ce sens qu'une chute continuelle du module d'élasticité est observée suite à l'incorporation des plastifiants susmentionnés. Le module chute de 1/2 de sa valeur en présence de 15% de plastifiant. Parallèlement, l'élongation à l'écoulement augmente. En outre il y a moins de perte de AS que de BBSA lors de la mise en oeuvre.

### Exemple 7: Tests de traction sur des compositions de polyoxyméthylène et de fluorure de polyvinylidène.

On a évalué les propriétés mécaniques d'échantillons, préparés comme à l'exemple 4, de polyoxyméthylène (POM) et de fluorure de polyvinylidène (PVDF), la température de mise en oeuvre étant toutefois de 220°C. En appliquant la norme ISO 527-1 sur des éprouvettes d'essais de type 5 A (ISO 527-2), on a évalué le module d'élasticité, les contraintes à l'écoulement et à la rupture, ainsi que l'élongation à l'écoulement et à la rupture, à température ambiante. Pour ce faire, on a utilisé une vitesse d'étirement de 50 mm par minute. Les résultats sont repris au Tableau VII. Dans ce tableau:
- la première colonne indique la nature des constituants des compositions testées (POM, PVDF et AS ont la signification donnée plus haut), et la quantité de plastifiant;
- la deuxième colonne donne la valeur du module d'élasticité, en MPa;
- la troisième colonne donne la valeur de la contrainte à l'écoulement, en MPa;
- la quatrième colonne donne la valeur de l'élongation à l'écoulement, en %;
- la cinquième colonne donne la contrainte à la rupture, en MPa;
- la sixième colonne donne l'élongation à la rupture, en %.

Dans tout le Tableau VII, les chiffres entre parenthèses indiquent les déviations standard.

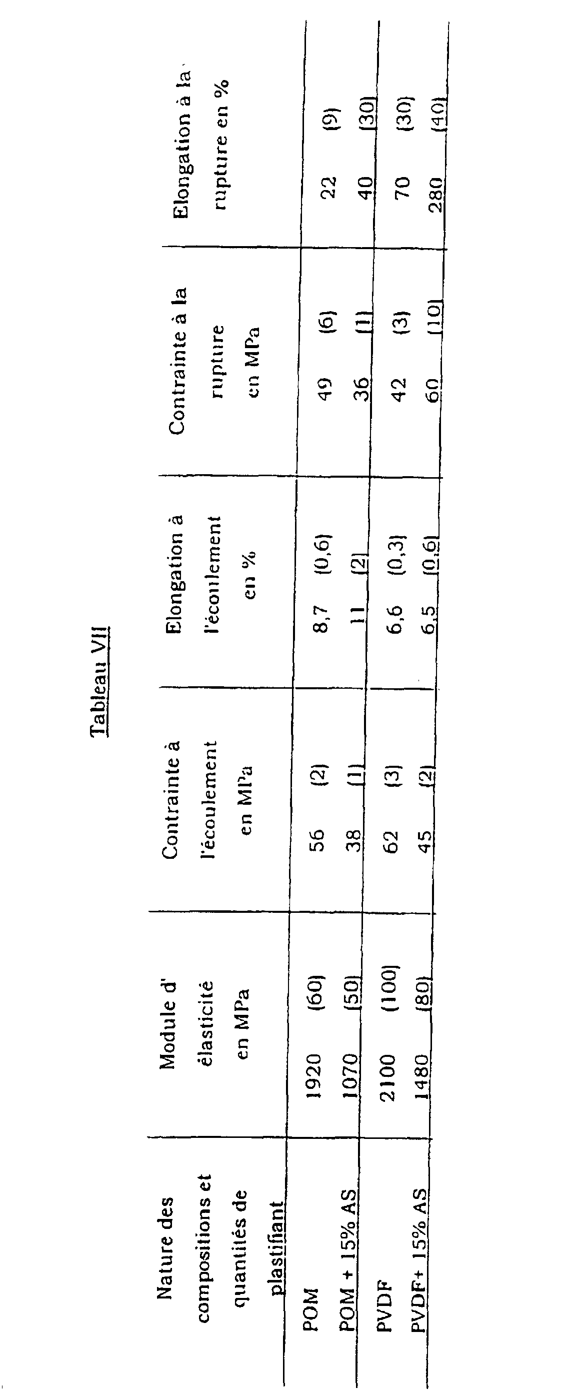

Les résultats du Tableau VII montrent que l'effet du sulfonamide AS sur le POM et le PVDF est appréciable. Le module chute de la moitié de sa valeur en présence de 15% de AS pour le POM et du quart pour le PVDF. Parallèlement, l'élongation à la rupture augmente de façon très appréciable pour le PVDF.

L'homme de l'art reconnaîtra dans les autres valeurs citées dans le tableau les caractéristiques propres aux effets plastifiants bien connus dans l'état de la technique.

### Exemple 8: Test de vieillissement accéléré.

L'obtention des échantillons en polyamide plastifié nécessaires pour les tests de vieillissement accéléré s'est faite comme à l'exemple 4. On place l'échantillon ainsi obtenu (de type S comme décrit dans la norme ASTM D 1822) dans un four maintenu à une température constante de 76°C. On pése les échantillons, à intervalle connu, pour déterminer leur perte de poids en fonction du temps. Les résultats sont donnés dans les Tableaux VIII a et b, dans lesquels:
- la première colonne indique le nombre de jours après lesquels le poids de l'échantillon est déterminé;
- la deuxième colonne indique la perte de poids d'un échantillon d'un polyamide-12 (PA-12) ne contenant pas de plastifiant, exprimée en pourcentage résiduel par rapport à la quantité mise en oeuvre;
- la troisième colonne indique, de la même manière qu'à la deuxième colonne, la perte de poids d'un échantillon de polyamide-12 contenant initialement 15% en poids de N-n-butylbenzènesulfonamide (BBSA), par rapport à l'ensemble du poids de la composition;
- la quatrième colonne indique, de la même manière qu'à la colonne 2, la perte de poids d'un échantillon de polyamide-12 contenant initialement 15% en poids de N-(2-hydroxyéthyl)benzénesulfonamide (AS)
- la cinquième colonne indique, de la même manière qu'à la deuxième colonne, la perte de poids d'un échantillon de polyamide-6 ne contenant pas de plastifiant;
- la sixième colonne indique, de la même manière qu'à la colonne 2, la perte de poids d'un échantillon de polyamide-6 contenant initialement 15% en poids de N-(2-hydroxyéthyl)benzènesulfonamide (AS).

**Tableau VIIIa**

| Jours | PA-12 | PA-12 + 15% BBSA* | PA-12 + 15% AS | PA-6 | PA-6 + 15% AS |
|---|---|---|---|---|---|
| 0 | 100 | 100 | 100 | 100 | 100 |
| 3 | 99,9 | 99,5 | 99,8 | 99,8 | 99,7 |
| 10 | 99,9 | 98,8 | 99,9 | 99,9 | 99,7 |
| 17 | 99,9 | 97,9 | 99,8 | 99,8 | 99,6 |
| 24 | 99,9 | 96,3 | 99,7 | 99,9 | 99,6 |
| 44 | 99,8 | 94,6 | 99,5 | 99,8 | 99,4 |
| 109 | 99,8 | 92,0 | 99,2 | 99,7 | 99,2 |
| 191 | 99,8 | 90,4 | 98,9 | 99,8 | 99,1 |
| 209 | 99,8 | 90,0 | 98,9 | 99,7 | 99,0 |
| 277 | 99,8 | 89,2 | 98,7 | 99,7 | 99,0 |

**Tableau VIIIb**

| Jours | PA-12 + 15% AY | PA-6,6 | PA-6,6 + 15% AS | PA-6,6 + 15% BI |
|---|---|---|---|---|
| 0 | 100 | 100 | 100 | 100 |
| 3 | 99,9 | 99,9 | 99,8 | 99,8 |
| 21 | 98,8 | 99,9 | 99,8 | 99,7 |
| 89 | 99,8 | 99,9 | 99,8 | 99,7 |

L'échantillon marqué "*" est donné à titre de comparaison.

Les Tableaux VIIIa et VIIIb montrent que la perte de poids est beaucoup plus rapide pour l'échantillon de polyarnide-12 contenant initialement 15% de BBSA que pour le même polyamide contenant initialement 15% de AS ou 15% de AY. Après 277 jours à 76°C par exemple, 10,8% des 15% de BBSA présents au départ ont disparu, alors que seulement 1,3% de l'AS a disparu par rapport aux 15% initiaux, après la même durée. Ceci s'explique par une volatilisation beaucoup plus rapide du BBSA que de l'AS hors du polyamide-12. Il faut remarquer que la perte de poids de 0,2% du polyamide-12 témoin est vraisemblablement due à une perte d'eau. Il en va de même pour les compositions plastifiées à base de PA-6 et de PA-6,6.

## Revendications

1. Composition comprenant au moins un polymère et au moins un plastifiant, **caractérisée en ce que**
a. le polymère est semi-cristallin et présente une température de mise en oeuvre égale ou supérieure à 220°C;
b. le plastifiant est un benzènesulfonamide aromatique représenté par la formule générale (I). 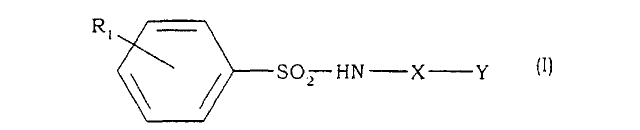
dans laquelle
R₁ représente un atome d'hydrogène, un groupe alkyle en C₁-C₄ ou un groupe alkoxy en C₁-C₄,
X représente un groupe alkylène en C₂-C₁₀, linéaire ou ramifié, ou
un groupe cycloaliphatique, ou
un groupe aromatique.
Y représente l'un des groupes OH ou 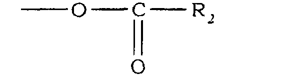
R₂ représentant un groupe alkyle en C₁-C₄ ou un groupe aromatique, ces groupes étant éventuellement eux-mêmes substitués par un groupe OH ou alkyle en C₁-C₄ ;
c. le plastifiant est incorporé au polymère par mélange à l'état fondu, à raison de 2 à 30% en poids par rapport au poids total de la composition.

2. Composition selon la revendication 1, **caractérisée en ce que** le polymère semi-cristallin présente une température de mise en oeuvre égale ou supérieure à 250 °C.

3. Composition selon l'une quelconque des revendications 1 ou 2, **caractérisée en ce que** dans le benzénesulfonamide de formule (I):
R₁ représente un atome d'hydrogène, un groupe méthyle ou méthoxy,
X représente un groupe alkylène en C₂-C₁₀, linéaire ou ramifié, ou un groupe phényle,
Y représente un groupe OH ou -O-CO-R₂,
R₂ représentant un groupe méthyle ou phényle, ceux-ci étant éventuellement eux-mêmes substitués par un groupe OH ou méthyle.

4. Composition selon l'une quelconque des revendications 1 à 3, **caractérisée en ce que** le polymère semi-cristallin est une polycétone qui est le produit de condensation du monoxyde de carbone avec au moins une oléfine aliphatique.

5. Composition selon la revendication 4, **caractérisees en ce que** le polycétone est le produit de condensation entre le monoxyde de carbone, l'éthène et le propène.

6. Composition selon l'une quelconque des revendications 1 à 3, **caractérisée en ce que** le polymère semi-cristallin est choisi parmi le polyamide-6 et le polyamide-6,6.

7. Compositions selon l'une quelconque des revendications 1 à 3 **caractérisées en ce que** le polymère semi-cristallin est choisi parmi le polyamide-4,6, le polyamide-6,9, le polyamide-6,10, le polyamide-6,12 et le polyamide MXD-6.

8. Composition selon l'une quelconque des revendications 1 à 3, **caractérisée en ce que** le polyamide semi-cristallin est choisi parmi le polyamide-11 et le polyamide-12.

9. Composition selon l'une quelconque des revendications 1 à 3, **caractérisées en ce que** le polymère semi-cristallin est choisi parmi le polyoxyméthylène et le fluorure de polyvinylidène.

10. Composition selon l'une quelconque des revendications 1 à 9, **caractérisée en ce que** le benzènesulfonamide aromatique de formule (I) est choisi parmi:
N-(2-hydroxyéthyl)benzènesulfonamide,
N-(3-hydroxypropyl)benzènesulfonamide,
N-(2-hydroxyéthyl)-p-toluènesulfonamide,
N-(4-hydroxyphényl)benzènesulfonamide,
N-[(2-hydroxy-1-hydroxyméthyl-1-méthyl)éthyl]benzènesulfonamide,
N-(5-hydroxy-1,5-diméthylhexyl)benzènesulfonamide,
N-(2-acétoxyéthyl)benzènesulfonamide,
N-(5-hydroxypentyl)benzènesulfonamide,
N-[2-(4-hydroxybenzoyloxy)éthyl]benzénesulfonamide,
N-[2-(4-méthylbenzoyloxy)éthyl]benzènesulfonamide,
N-(2-hydroxyéthyl)-p-méthoxybenzènesulfonamide,
N-(2-hydroxypropyl)benzènesulfonamide.

11. Composition selon l'une quelconque des revendications 1 à 9, **caractérisée en ce que** le benzènesulfonamide aromatique de formule (I) est choisi parmi:
N-(2-hydroxyéthyl)benzènesulfonamide,
N-(3-hydroxypropyl)benzènesulfonamide,
N-(2-acétoxyéthyl)benzènesulfonamide.

12. Composition selon l'unè quelconque des revendications 1 à 11, **caracterisée en ce qu'**on utilise le benzènesulfonamide aromatique de formule (I) en une quantité de 5% à 20% en poids, par rapport au poids total de la composition.

13. Composition selon l'une quelconque des revendications 1 à 12, **caractérisée en ce que** la composition contient également des charges minérales, des auxiliaires de mise en oeuvre, des anti-oxydants, des anti-UV.

14. Procédé de préparation d'articles **caractérisé en ce que** l'on met en oeuvre par extrusion, injection, extrusion soufflage, les compositions selon les revendications 1 à 13.

15. Articles obtenus selon le procédé de la revendication 14.

## Claims

1. Composition comprising at least one polymer and at least one plasticizer, **characterized in that**
a. the polymer is semi-crystalline and has an application temperature equal to or above 220°C;
b. the plasticizer is an aromatic benzenesulfonamide represented by the general formula (I) 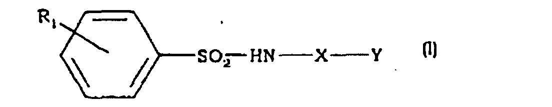
in which
R₁ represents a hydrogen atom, an alkyl group with C₁-C₄, or an alkoxy group with C₁-C₄,
X represents a linear or branched alkylene group with C₂-C₁₀, or
a cycloaliphatic group, or
an aromatic group,
Y represents either OH groups or 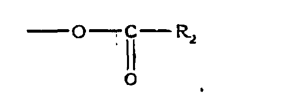
R₂ representing an alkyl group with C₁-C₄ or an aromatic group, these groups being themselves optionally substituted by a an OH group or alkyl group with C₁-C₄;
c. the plasticizer is incorporated in the polymer by mixing in the molten state, in an amount of 2 to 30 % by weight based on the total weight of the composition.

2. Composition according to claim 1, **characterized in that** the semi-crystalline polymer has an application temperature equal to or above 250°C.

3. Composition according to either of claims 1 or 2, **characterized in that** in the benzenesulfonamide of formula (I):
R₁ represents a hydrogen atom, a methyl group or a methoxy group,
X represents a Linear or branched alkylene group with C₂-C₁₀ or a phenyl group,
Y represents an OH group or -O-CO-R₂,
R₂ representing a methyl group or a phenyl group, these being themselves optionally substituted by an OH or methyl group.

4. Composition according to any one of claims 1 to 3, **characterized in that** the semi-crystalline polymer is a polyketone that is the condensation product of carbon monoxide with at least one aliphatic olefin.

5. Composition according to claim 4, **characterized in that** the polyketone is the condensation product between carbon monoxide, ethene and propene.

6. Composition according to any one of claims 1 to 3, **characterized in that** the semi-crystalline polymer is chosen from polyamide-6 and polyamide-6,6.

7. Compositions according to any one of claims 1 to 3, **characterized in that** the semi-crystalline polymer is chosen from polyamide-4,6, polyamide-6,9, polyamide-6,10, polyamide-6,12 and polyamide MDX-6.

8. Composition according to any one of claims 1 to 3, **characterized in that** the semi-crystalline polymer is chosen from polyamide-11 and polyamide-12.

9. Composition according to any one of claims 1 to 3, **characterized in that** the semi-crystalline polymer is chosen from polyoxymethylene and polyvinylidene fluoride.

10. Composition according to any one of claims 1 to 9, **characterized in that** the aromatic benzenesulfonamide of formula (I) is chosen from:
N-(2-hydroxyethyl)benzenesulfonamide,
N-(3-hydroxypropyl)benzenesulfonamide,
N-(2-hydroxyethyl)p-toluenenesulfonamide,
N-(4-hydroxyphenyl)benzenesulfonamide,
N-[(2-hydroxy-1-hydroxymethyl-1-methyl)ethyl]benzenesulfonamide,
N-(5-hydroxy-1,5-dimethylhexyl)benzenesulfonamide,
N-(2-acetoxyethyl)benzenesulfonamide,
N-(5-hydroxypentyl)benzenesulfonamide,
N-[2-(4-hydroxybenzoyloxy)ethyl]benzenesulfonamide,
N-[2-(4-methylbenzoyloxy)ethyl]benzenesulfonamide,
N-(2-hydroxyethyl)p-methoxybenzenesulfonamide,
N-(2-hydroxypropyl)benzenesulfonamide.

11. Composition according to any one of claims 1 to 9, **characterized in that** the aromatic benzenesulfonamide of formula (I) is chosen from:
N-(2-hydroxyethyl)benzenesulfonamide,
N-(3-hydroxypropyl)benzenesulfonamide,
N-(2-acetoxyethyl)benzenesulfonamide,

12. Composition according to any one of claims 1 to 11, **characterized in that** the aromatic benzenesulfonamide of formula (I) is used in an amount of 5 % to 20 % by weight, based on the total weight of the composition.

13. Composition according to any one of claims 1 to 12, **characterized in that** the composition also contains inorganic fillers, application auxiliaries, anti-oxidants and anti-UV agents.

14. Method for preparing articles **characterized in that** the compositions according to claims 1 to 13 are employed by extrusion, injection, blow-extrusion.

15. Articles obtained according to the method of claim 14.

## Patentansprüche

1. Zusammensetzung umfassend wenigstens ein Polymer und wenigstens einen Weichmacher, **dadurch gekennzeichnet, dass**
a. das Polymer semikristallin ist und eine Verarbeitungstemperatur gleich oder höher 220 °C aufweist;
b. der Weichmacher ein aromatisches Benzensulfonamid ist, dargestellt durch die allgemeine Formel (I) 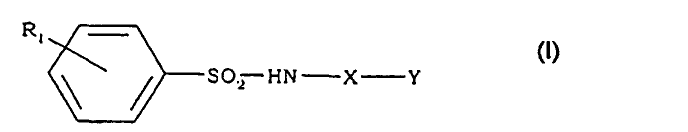
worin
R₁ ein Wasserstoffatom, eine C₁-C₄-Alkylgruppe oder eine C₁-C₄-Alkoxygruppe darstellt,
X darstellt eine lineare oder verzweigte C₂-C₁₀-Alkylengruppe oder
eine cycloaliphatische Gruppe oder
eine aromatische Gruppe,
Y eine der Gruppen OH oder 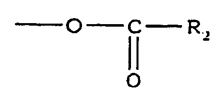 darstellt, wobei
R₂ eine C₁-C₄-Alkylgruppe oder eine aromatische Gruppe darstellt, wobei diese Gruppen gegebenenfalls selbst mit einer OH- oder C₁-C₄-Alkylgruppe substituiert sind;
c. der Weichmacher dem Polymer durch Mischen in der Schmelze in einer Menge von 2 bis 30 Gew.-%, bezogen auf das Gesamtgewicht der Zusammensetzung, zugesetzt wird.

2. Zusammensetzung gemäß Anspruch 1, **dadurch gekennzeichnet, dass** das semikristalline Polymer eine Verarbeitungstemperatur gleich oder höher 250 °C aufweist.

3. Zusammensetzung gemäß einem der Ansprüche 1 oder 2, **dadurch gekennzeichnet, dass** in dem Benzensulfonamid der Formel (I):
R₁ ein Wasserstoffatom, eine Methyl- oder Methoxygruppe darstellt,
X eine lineare oder verzweigte C₂-C₁₀-Alkylengruppe oder eine Phenylgruppe darstellt,
Y eine OH- oder -O-CO-R₂-Gruppe darstellt, wobei
R₂ eine Methyl- oder Phenylgruppe darstellt, wobei diese gegebenenfalls selbst mit einer OH- oder Methylgruppe substituiert sind.

4. Zusammensetzung gemäß einem der Ansprüche 1 bis 3, **dadurch gekennzeichnet, dass** das semikristalline Polymer ein Polyketon ist, das das Kondensationsprodukt von Kohlenmonoxid mit wenigstens einem aliphatischen Olefin ist.

5. Zusammensetzung gemäß Anspruch 4, **dadurch gekennzeichnet, dass** das Polyketon das Produkt der Kondensation zwischen Kohlenmonoxid, Ethen und Propen ist.

6. Zusammensetzung gemäß einem der Ansprüche 1 bis 3, **dadurch gekennzeichnet, dass** das semikristalline Polymer unter Polyamid-6 und Polyamid-6,6 ausgewählt ist.

7. Zusammensetzungen gemäß einem der Ansprüche 1 bis 3, **dadurch gekennzeichnet, dass** das semikristalline Polymer unter Polyamid-4,6, Polyamid-6,9, Polyamid-6,10, Polyamid-6,12 und Polyamid MXD-6 ausgewählt ist.

8. Zusammensetzung gemäß einem der Ansprüche 1 bis 3, **dadurch gekennzeichnet, dass** das semikristalline Polymer unter Polyamid-11 und Polyamid-12 ausgewählt ist.

9. Zusammensetzung gemäß einem der Ansprüche 1 bis 3, **dadurch gekennzeichnet, dass** das semikristalline Polymer unter Polyoxymethylen und Polyvinylidenfluorid ausgewählt ist.

10. Zusammensetzung gemäß einem der Ansprüche 1 bis 9, **dadurch gekennzeichnet, dass** das aromatische Benzensulfonamid der Formel (I) ausgewählt ist unter:
N-(2-Hydroxyethyl)benzensulfonamid,
N-(3-Hydroxypropyl)benzensulfonamid,
N-(2-Hydroxyethyl)-p-toluensulfonamid,
N-(4-Hydroxyphenyl)benzensulfonamid,
N-[(2-Hydroxy-1-hydroxymethyl-1-methyl)ethyl]benzensulfonamid,
N-(5-Hydroxy-1,5-dimethylhexyl)benzensulfonamid,
N-(2-Acetoxyethyl)benzensulfonamid,
N-(5-Hydroxypentyl)benzensulfonamid,
N-[2-(4-Hydroxybenzoyloxy)ethyl]benzensulfonamid,
N-[2-(4-Methylbenzoyloxy)ethyl]benzensulfonamid,
N-(2-Hydroxyethyl)-p-methoxybenzensulfonamid,
N-(2-Hydroxypropyl)benzensulfonamid.

11. Zusammensetzung gemäß einem der Ansprüche 1 bis 9, **dadurch gekennzeichnet, dass** das aromatische Benzensulfonamid der Formel (I) ausgewählt ist unter:
N-(2-Hydroxyethyl)benzensulfonamid,
N-(3-Hydroxypropyl)benzensulfonamid,
N-(2-Acetoxyethyl)benzensulfonamid.

12. Zusammensetzung gemäß einem der Ansprüche 1 bis 11, **dadurch gekennzeichnet, dass** man das aromatische Benzensulfonamid der Formel (I) in einer Menge von 5 Gew.-% bis 20 Gew.-%, bezogen auf das Gesamtgewicht der Zusammensetzung, verwendet.

13. Zusammensetzung gemäß einem der Ansprüche 1 bis 12, **dadurch gekennzeichnet, dass** die Zusammensetzung auch mineralische Füllstoffe, Verarbeitungshilfsmittel, Antioxidantien, UV-Schutzmittel enthält.

14. Verfahren zur Herstellung von Gegenständen, **dadurch gekennzeichnet, dass** man die Zusammensetzungen gemäß den Ansprüchen 1 bis 13 durch Extrusion, Spritzen, Extrusionsblasformen verarbeitet.

15. Gegenstände, die gemäß dem Verfahren des Anspruchs 14 erhalten werden.
